# EUROPÄISCHE PATENTSCHRIFT

(11) **EP 1 716 741 B1**
(45) Veröffentlichungstag und Bekanntmachung des Hinweises auf die Patenterteilung: **16.09.2009**
(21) Anmeldenummer: 06002261.3
(22) Anmeldetag: 03.02.2006
(51) Int. Cl.: A01D 75/20

(54) **Landwirtschaftliche Arbeitsmaschine mit Schutzvorrichtung**
Agricultural machine with protecting device
Machine agricole avec dispositif de protection

(30) Priorität: 26.04.2005 DE 102005019667
(43) Veröffentlichungstag der Anmeldung: 02.11.2006
(73) Patentinhaber: CLAAS Selbstfahrende Erntemaschinen GmbH, 33428 Harsewinkel (DE)
(72) Erfinder: Oliva, Christoph, 88348 Bad Saulgau (DE); Isfort, Heinrich, 48249 Dülmen (DE)

(56) Entgegenhaltungen:
- DE-A1- 10 063 555
- DE-A1- 19 911 828
- FR-A- 1 261 835
- FR-A- 1 281 560

## Beschreibung

Die Erfindung betrifft eine landwirtschaftliche Arbeitsmaschine nach dem Oberbegriff des Anspruchs 1.

Aus der DE 100 63 555 ist eine landwirtschaftliche Arbeitsmaschine bekannt geworden, die über eine Schutzvorrichtung verfügt, die sich an der Vorderseite der landwirtschaftlichen Arbeitsmaschine oberhalb von Funktionselementen erstreckt und als ein von den Funktionselementen getrenntes und beabstandetes Element ausgebildet ist. Vorzugsweise besteht dabei die Schutzvorrichtung aus in sich flexiblem Material, wie Stoff, Gummituch, Kunststoff oder Industriegewebe. Damit wird vermieden, dass aufgewirbelte Schmutzpartikel auf die den Funktionselementen nachfolgenden Baugruppen gelangen und sich dort festsetzen können, wodurch beispielsweise Brände durch ein heißgelaufenes Lager oder durch Schleifen der Häckseltrommel eines selbstfahrenden Feldhäckslers vermieden werden.

Zudem ist aus der DE 100 63 555 bekannt, die Rückseite einer flexiblen Schutzvorrichtung unterhalb der Fahrerkabine eines selbstfahrenden Feldhäckslers zu fixieren und ihre Vorderseite an der Erntegutaufnahmevorrichtung zu befestigen. Eine derartige Ausführung hat jedoch den Nachteil, dass durch Höhenbewegungen (Anheben und Absenken) der Erntegutaufnahmevorrichtung, die Schutzvorrichtung abwechselnd gedehnt und gestaucht wird und dies zu erhöhtem Verschleiß der Schutzvorrichtung und deren Bruch führt.

Weiter ist aus der DE 100 63 555 bekannt, dass bei abgesenkter Erntegutaufnahmevorrichtung das hintere Ende der Schutzvorrichtung höher als das vordere Ende angeordnet ist, wodurch Schmutzpartikel durch die Schwerkraft von selbst hlnunter rutschen. Diese Reinigungswirkung kann durch Anheben und Absenken der Erntegutaufnahmevorrichtung unterstützt werden. Dabei ist als nachteilig anzusehen, dass die Länge der Schutzvorrichtung für die tiefste Stellung des Einzugs ausgebildet werden muss und dann durch die nach innen gerichtete Wölbung der Schutzvorrichtung die Gefahr besteht, dass in dieser Wölbung Schmutzpartikel eingelagert werden, die zunehmend die Verschwenkbarkeit der Erntegutaufnahmevorrichtung behindern.

Aus der DE 199 11 828 ist eine landwirtschaftliche Arbeitsmaschine bekannt, an dessen montierter höhenbeweglicher Erntgutaufnahmevorrichtung eine Schmutzfangvorrichtung mit einem Ende verbunden ist und das andere Ende die Höhenbewegungen der Erntegutaufnahmevorrichtung nachvollziehen kann. Nachteilig ist, dass in sämtlichen von der Schutzfangvorrichtung einnehmbaren Positionen ein Spalt wischen der Fahrerkabine der Arbeitsmaschine und der Schmutzfangvorrichtung bestehen bleibt, so dass weiterhin die Ablage von aufgewirbelten Schmutzpartikeln auf die nachfolgenden Baugruppen die Folge ist und die Gefahr besteht, dass Brände durch heißgelaufene Lager oder durch Schleifen der Häckseltrommel eines Feldhäckslers auftreten.

Es ist deshalb Aufgabe der Erfindung, die beschriebenen Nachteile des Standes der Technik zu vermeiden und insbesondere eine Schutzvorrichtung für landwirtschaftliche Arbeitsmaschinen zu schaffen, die zuverlässig arbeitet.

Diese Aufgabe wird erfindungsgemäß durch die kennzeichnenden Merkmale des Anspruchs 1 gelöst, wobei in den weiteren Patentansprüchen Merkmale aufgeführt sind, die die Lösung in vorteilhafter Weise weiterentwickeln.

Indem die Schutzvorrichtung an der landwirtschaftlichen Arbeitsmaschine einen Endes mit zumindest einem höhenbeweglichen Funktionselement verbunden ist, und anderen Endes frei bewegbar die Höhenbewegungen des Funktionselements nachvolizieht und wobei der landwirtschaftlichen Arbeitsmaschine (2) frontseitig eine Fahrerkabine (28) zugeordnet und das freie Ende der Schutzvorrichtung (21) in einem Bereich unterhalb der vorderen Seite der Fahrerkabine (28) kollisionsfrei bewegbar ist, wird eine Schutzvorrichtung geschaffen, die trotz Höhenbewegungen des Funktionselements nicht gedehnt und nicht gestaucht wird und dadurch ein erhöhter Verschleiß und Bruch der Schutzvorrichtung vermieden wird. Bei diesen Funktionselementen kann es sich um Antriebe sowie Antriebs- und Funktionsbaugruppen handeln, die in der Regel Gutförder- und/oder Gutbearbeitungseinrichtungen zugeordnet sind.

Erfindungsgemäß erstreckt sich die Schutzvorrichtung über die gesamte Breite des höhenbeweglichen Funktionselements. Dadurch können Ansammlungen von Schmutzpartikeln im variablen Freiraum zwischen dem höhenbeweglichen Funktionselement und dem vorderen Bereich unterhalb der Fahrerkabine verhindert werden, die Störungen hervorrufen.

Besonders zweckmäßig ist die Erfindung, wenn das höhenbewegliche Funktionselement mit einem oder mehreren senkrecht in Fahrtrichtung positionierten flächigen Stützelementen ausgebildet ist, welche mit rückwärtigen Verriegelungen versehen sind. Dadurch kann die Schutzvorrichtung trotz der von der landwirtschaftlichen Arbeitsmaschine ausgehenden Schwingungen und/oder Vibrationen schwingungsarm die Bewegungen des höhenbeweglichen Funktionselements nachvollziehen.

Indem die Schutzvorrichtung aus elastischem Material wie Kunststoff oder Metallblech ausgebildet ist, kann die Schutzvorrichtung die von Funktionselementen und/oder von der landwirtschaftlichen Arbeitsmaschine selbst ausgehenden Schwingungen und/oder Vibrationen ausgleichen und führt dadurch zu einer Verschleißminderung der elastischen Schutzvorrichtung.

Eine besonders vorteilhafte Weiterbildung der Erfindung wird dann erreicht, wenn die Schutzvorrichtung derart gewölbt ist, so dass die von der Schutzvorrichtung abgehaltenen Schmutzpartikel entlang der gewölbten Rückhaltefläche abfließen und eine Ansammlung von Schmutzpartikeln oberhalb der gewölbten Rückhaltefläche verhindert werden kann.

Eine besonders effiziente Ausführung der gewölbten Rückhaltefläche der Schutzvorrichtung wird dann erreicht, wenn die Krümmung der gewölbten Rückhaltefläche größer als der durchschnittliche Reibwinkel zwischen dem zurückhaltenden Gut und der Rückhaltefläche ist, wodurch permanent ein Abfluss der Schmutzpartikel von der gewölbten Rückhaltefläche erreicht wird.

In einer weiteren vorteilhaften Ausgestaltung der Erfindung ist der Krümmungsradius der gewölbten Rückhaltefläche derart gewählt, so dass in jeder Höhen- und Senkposition des Funktionselements der Abstand zwischen der vorderen Unterkante der Fahrerkabine und der Oberseite der gewölbten Rückhaltefläche konstant bleibt, wodurch in Jeder Position des höhenbeweglichen Funktionselements ein Eindringen von Schmutzpartikel in den variablen Freiraum unterhalb der Fahrerkabine verhindert werden kann.

Wenn am unteren Ende der elastischen Schutzvorrichtung Befestigungsstrukturen ausgeführt sind, kann die elastische Schutzvorrichtung auf einfache und kostengünstige Weise mit dem höhenbeweglichen Funktionselement verbunden werden.

In einer vorteilhaften Ausgestaltung sind die Befestigungsstrukturen als Schraubenverbindungen und/oder Klemmverbindungen ausgeführt, so dass die elastische Schutzvorrichtung einfach und zügig montiert und demontiert werden kann.

Eine weitere Verbesserung besteht darin, dass die Schutzvorrichtung mit ihrem unteren Ende schwenkgelagert auf dem höhenbeweglichen Funktionselement befestigt ist, wodurch im Service- und/oder Wartungsfall durch einfaches Umklappen der Schutzvorrichtung in Fahrtrichtung ein schneller und einfacher Zugang zu nachfolgenden Funktionsbaugruppen ermöglicht ist.

Vorzugsweise ist die elastische Schutzvorrichtung zur Montage bzw. Demontage mit einem Montage- bzw. Demontageelement ausgeführt, so dass im Service-und/oder Wartungsfall ein schneller und einfacher Zugang zum vorderen Bereich der landwirtschaftlichen Arbeitsmaschine ermöglicht ist. Hierbei könnte das Montage- bzw. Demontageelement gleichzeitig als Trittstufe ausgebildet werden, um so den Zugang zur Frontscheibe der Fahrerkabine zu erleichtern.

Indem die Schutzvorrichtung aus geräuschminderndem Material sein kann, wird eine Minderung der Betriebsgeräusche der landwirtschaftlichen Arbeitsmaschine erreicht. Die geeignete Materialwahl kann zu einer Senkung des Geräuschpegels führen, welcher von höhenbeweglichen Funktionselementen und/oder nachfolgenden Funktionsbaugruppen bewirkt wird.

Zur Verhinderung einer Kollision des freien Endes der elastischen Schutzvorrichtung mit dem vorderen Bereich unterhalb der Fahrerkabine und zur Unterstützung der kollisionsfreien Bewegbarkeit des freien Endes der Schutzvorrichtung ist in einer weiteren vorteilhaften Ausgestaltung der Erfindung vorgesehen, dass unterhalb der vorderen Seite der Fahrerkabine quer zur Fahrtrichtung der landwirtschaftlichen Arbeitsmaschine zumindest ein elastisches Abstandselement ausgebildet ist. Vorzugsweise liegt das untere Ende des elastischen Abstandselements permanent auf der Oberseite der elastischen Schutzvorrichtung auf, welches ein Eindringen auch von kleinsten aufgewirbelten Schmutzpartikeln von oberhalb des höhenbeweglichen Funktionselements in den Bereich unterhalb der Fahrerkabine verhindert und bei der Höhenbewegungen des Funktionselements Verschmutzungen sicher abstreift.

Indem das Abstandselement als elastischer Abstreifer ausgebildet ist und sich zumindest teilweise über die Breite der Schutzvorrichtung erstreckt, werden durch die Höhenbewegungen des Funktionselements Verschmutzungen auf der Schutzvorrichtung sicher abgestreift.

Die Verwendung der Schutzvorrichtung ist an bestimmte landwirtschaftliche Arbeitsmaschinen, die zur Aufnahme von Erntegut geeignet sind und bei denen störende Schmutzpartikel anfallen, nicht gebunden. Beispielhaft ist ein selbstfahrender Feldhäcksler zu nennen, bei dem die Schutzvorrichtung, oberen Endes frei bewegbar, unteren Endes auf dem höhenbeweglichen Einzugsgehäuse angeordnet sein kann. Gleichfalls kann die elastische Schutzvorrichtung, oberen Endes unterhalb der Fahrerkabine frei bewegbar, mit dem unteren Ende am höhenbeweglichen Schrägförderkanal eines Mähdreschers angeordnet sein, um den variablen Freiraum zwischen der Fahrerkabine und dem höhenbeweglichen Schrägförderkanal vor Ansammlungen von Schmutzpartikeln zu schützen.

Weitere vorteilhafte Ausgestaltungen sind Gegenstand weiterer Unteransprüche und werden nachfolgend anhand von zwei Zeichnungen näher erläutert.

Es zeigen:
- Figur 1:: den vorderen Teil eines selbstfahrenden Feldhäckslers mit einem höhenbeweglichen Vorsatzgerät in Seitenansicht und Teilschnittdarstellung
- Figur 2:: eine perspektivische Ansicht der Schutzvorrichtung

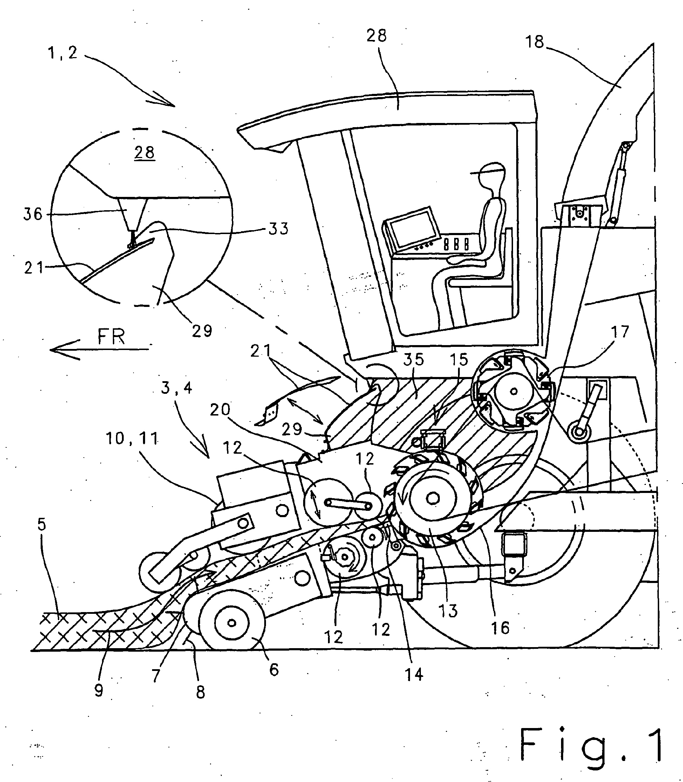

Figur 1 zeigt eine als selbstfahrender Feldhäcksler 1 ausgeführte landwirtschaftliche Arbeitsmaschine 2 In Seitenansicht und Teilschnittdarstellung. Der Feldhäcksler baut sich auf einem Rahmen auf, der von nicht bezifferten vorderen und nicht dargestellten rückwärtigen Rädern getragen wird. Frontseitig ist dem Feldhäcksler 1 ein Vorsatzgerät 3 in Form einer Pickup 4 zugeordnet. Die Pick up 4 ist über einen nicht bezifferten Halterrahmen mit weiteren Arbeitsorganen des Feldhäckslers höhenbeweglich verbunden. Die Pickup 4 dient dazu, in Schwaden abgelegtes Erntegut 5 vom Boden aufzunehmen und es dem Feldhäcksler 1 zur weiteren Bearbeitung zuzuführen. Die Pickup 4 stützt sich dabei über ein Fahrwerk 6 auf dem vom Boden ab. Dabei wird die Pickup 4 während des Erntebetriebes mit geringem Abstand zum Boden über das Erntefeld bewegt, während sie beim Transport auf Straßen oder auf Wegen angehoben ist.

Die dargestellte Pickup 4 besteht aus einer Aufsammeltrommel 7 mit Aufnahmezinken 8 über die das Erntegut 5 oberschlächtig entlang des Erntgutstromes 9 gefördert wird. Eine Fördereinrichtung 10, die in Form einer Querförderschnecke 11 ausgebildet ist, führt das Erntegut 5 mittig zusammen und führt es den nachgeordneten Einzugs- und Vorpresswalzen 12 zu. Die Einzugs- und Vorpresswalzen 12 leiten das Erntegut 5 der nachgeordneten und rotierenden messerbesetzten Häckseltrommel 13 zu, welche das Erntegut 5 an einer Gegenschneide 14 zerkleinert. Oberhalb der Häckseltrommel 13 ist eine Messerschleifvorrichtung 15 angeordnet. Das zerkleinerte Erntegut 5 wird sodann über einen sich verjüngenden Förderschacht 16 an einen Nachbeschleuniger 17 übergeben. Der Nachbeschleuniger 17 beschleunigt das zerkleinerte Erntegut 5 und fördert es über einen horizontal und vertikal verstellbaren Auswurfkrümmer 18 und eine nicht dargestellte diesem verschwenkbar zugeordnete Auswurfkrümmerklappe auf einen nicht abgebildeten Transportwagen.

Im dargestellten Ausführungsbeispiel erstreckt sich die elastische Schutzvorrichtung 21 über die gesamte Breite des höhenbeweglichen Einzugsgehäuses 20. Es ist auch denkbar, die elastische Schutzvorrichtung 21 bereichsweise über das Einzugsgehäuse 20 oder über die Breite der Fahrerkabine 28, von der aus der Feldhäcksler betrieben wird, erstrecken zu lassen. Das freie Ende der gewölbten Rückhaltefläche 24 reicht bei abgesenkter Pickup 4 bis zur vorderen Unterkante der Fahrerkabine 28. Aufgrund der gewählten Krümmung bleibt der Abstand der oberen Seite der gewölbten Rückhaltefläche 24 zur vorderen Unterkante der Fahrerkabine 28 in jeder Position des Einzugsgehäuses 20 konstant. Bei vollständig angehobenem Einzugsgehäuse 20 befindet sich die gewölbte Rückhaltefläche 24 komplett unterhalb der Fahrerkabine 28 und tritt mit sinkendem Einzugsgehäuse 20 unterhalb der vorderen Seite der Fahrerkabine 28 stufenlos hervor, wobei für die kollisionsfreie Bewegbarkeit der elastischen Schutzvorrichtung 21 eine Umkonstruktion der Fahrerkabine 28 des selbstfahrenden Feldhäckslers 1 nicht erfolgen muss. Durch die freie Bewegbarkeit des oberen Endes der elastischen Schutzvorrichtung 21 kommt es bei Höhenbewegungen des Einzugsgehäuses 20 nicht zu einer Dehnung oder Stauchung der Schutzvorrichtung 21, welches einen erhöhten Verschleiß und einen vorzeitigen Bruch der Schutzvorrichtung 21 verhindert.
Auf dem Einzugsgehäuse 20 ist mittig in Fahrtrichtung FR des Feldhäckslers 1 formschlüssig ein flächiges Stützelement 29 ausgebildet. Die vordere und die obere Seite des Stützelementes 29 sind entsprechend den Konturen der senkrechten und gewölbten Rückhalteflächen 23,24 geformt. Passgenau liegt die elastischen Schutzvorrichtung 21 auf dem flächigen Stützelement 29 auf. Am oberen Ende des Stützelements 29 befindet sich eine rückwärtige Verriegelung 33, in welche das freie Ende der gewölbten Rückhaltefläche 24 eingeschoben und arretiert ist. Denkbar wäre auch, das höhenbewegliche Einzugsgehäuse 20 ohne Stützelement auszubilden und die elastische Schutzvorrichtung 21 mit Seitenteilen zu versehen. Es wäre auch denkbar, an der Fahrerkabine 28 befestigte, sich nach unten erstreckende Seitenteile anzuordnen, die zusammen mit der Schutzvorrichtung 21 einen Staubschutz für nachfolgende Funktionsbaugruppen wie beispielsweise die Messerschlelfvorrichtung 15 bilden.

Der variable Freiraum 35 zwischen dem höhenbeweglichen Einzugsgehäuse 20 und der Fahrerkabine 28 ist bei angehobenem wie auch bei abgesenktem Einzugsgehäuse 20 von der elastischen Schutzvorrichtung 21 abgedeckt. Sie verhindert, dass sich von der Pickup 4 aufgewirbelte Schmutzpartikel im variablen Freiraum 35 und auf nachfolgenden Baugruppen bzw. Funktionsbaugruppen wie beispielsweise auf der Messerschleifeinrichtung 15 anhäufen. Die von der Pickup 4 aufgewirbelten Schmutzpartikel rutschen an der gewölbten und an der senkrecht positionierten Rückhaltefläche 23,24 von der elastischen Schutzvorrichtung 21 nach unten ab. Zusätzlich verhindert die elastische Schutzvorrichtung 21, dass insbesondere von den sich unterhalb der Schutzvorrichtung 21 befindlichen Funktionsbaugruppen, wie beispielsweise die Häckseltrommel 13 und die Messerschleifvorrichtung 15, verursachte Geräusche nach außen dringen. Dadurch ist das Betriebsgeräusch des Feldhäckslers 1 gemindert.

Unterhalb der vorderen Seite der Fahrerkabine 28 erstreckt sich in der Breite des Einzugsgehäuses 20 quer zur Fahrtrichtung des Feldhäckslers 1 ein elastisches Abstandselement 36 in Form eines Abstreifers, das mit seinem unteren Ende permanent auf der oberen Seite der gewölbten Rückhaltefläche 24 der elastischen Schutzvorrichtung 21 aufliegt. Dadurch werden Fertigungstoleranzen und Lagerspiel sowie Bewegungen der beweglich gelagerten Fahrerkabine 28 ausgeglichen und ermöglichen permanent eine kollisionsfreie Bewegung des freien Endes der elastischen Schutzvorrichtung 21 unterhalb der vorderen Fahrerkabine 28. Außerdem verhindert das elastische Abstandselement, dass auch kleinste aufgewirbelte Schmutzpartikel von oberhalb des höhenbeweglichen Einzugsgehäuses 20 in den variablen Freiraum 35 zwischen dem höhenbeweglichen Einzugsgehäuse 20 und der Fahrerkabine 28 gelangen.

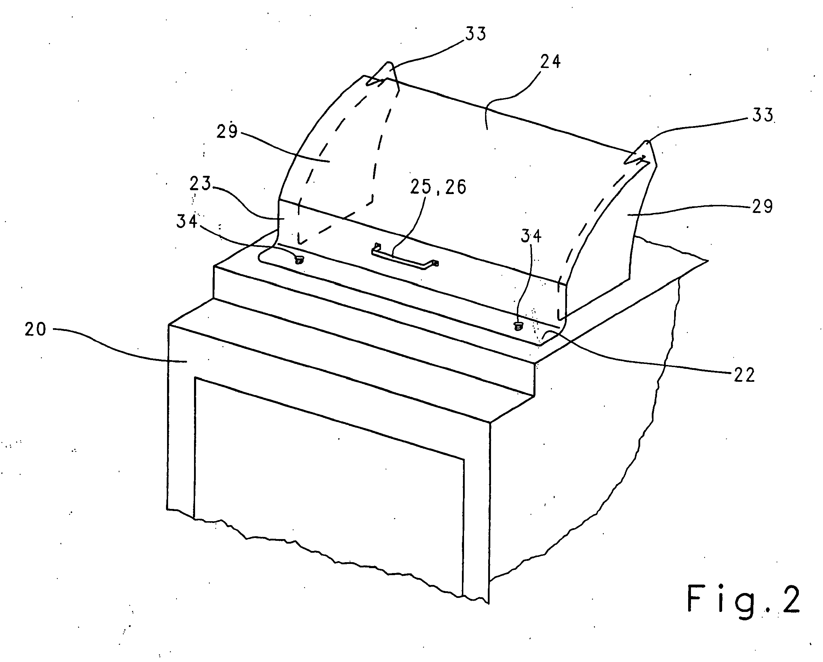

Fig. 2 zeigt die elastische Schutzvorrichtung 21 in einer dreidimensionalen Detaildarstellung. Sie erstreckt sich bereichsweise über die Breite des Einzugsgehäuses 20. Die elastische Schutzvorrichtung 21 besteht aus einem montierbaren Steg 22. Im 90° Winkel zum montierbaren Steg 22 erstreckt sich in gleicher Breite eine vordere senkrechte Rückhaltefläche 23. Daran schließt sich eine nach hinten abwinkelte und nach oben gewölbte Rückhaltefläche 24 an.

Mittels des montierbaren Steges 22 ist die elastischen Schutzvorrichtung durch an sich bekannte Befestigungsstrukturen in Form von zwei Schraubenverbindungen (Schnellverschluss) 34 auf dem Einzugsgehäuse 20 befestigt. Die mit dem Einzugsgehäuse 20 durch Schraubenverbindungen 34 befestigte elastische Schutzvorrichtung 21 ist durch Lösen der Schraubenverbindungen 34 vom Einzugsgehäuse 20 abnehmbar. Entsprechend könnte die elastische Schutzvorrichtung 21 auch mit nicht dargestellten Klemmverbindungen am Einzugsgehäuse 20 befestigt sein.

Auf dem Einzugsgehäuse 20 erstrecken sich formschlüssig zwei flächige Stützelemente 29. Wie in Fig. 1 entsprechen die vordere und die obere Seite des Stützelements den Konturen der senkrechten und der gewölbten Rückhaltefläche 23,24. Auf den Stützelementen 29 liegt die elastische Schutzvorrichtung 21 auf. Am oberen Ende der Stützelemente 29 befindet sich eine rückwärtige Verriegelung 33, in welche das freie Ende der gewölbten Rückhaltefläche 24 eingeschoben und arretiert ist.

Zur vereinfachten Montage- bzw. Demontage der elastischen Schutzvorrichtung 21 ist an der Schutzvorrichtung 21 ein Montage- bzw. Demontageelement 25 In Form eines U-förmigen Bügels 26 angeordnet. Es erstreckt sich mittig auf der vorderen Seite der senkrechten Rückhaltefläche 23 der elastischen Schutzvorrichtung 21. Denkbar wäre auch, andersartige, wie auch mehrere Montage- bzw. Demontageelemente 25 auf der vorderen Seite der senkrechten Rückhaltefläche 38 anzuordnen.

Es liegt im Rahmen des Könnens eines Fachmannes die beschriebenen Ausführungsbeispiele in nicht dargestellter Weise abzuwandeln oder an anderen landwirtschaftlichen Arbeitsmaschinen einzusetzen, um die beschriebenen Effekte zu erzielen, ohne dabei den Rahmen der Erfindung zu verlassen.

### Bezugszeichenliste:

- 1: Selbstfahrender Feldhäcksler
- 2: Landwirtschaftliche Arbeitsmaschine
- 3: Vorsatzgerät
- 4: Pickup
- 5: Erntegut
- 6: Fahrwerk
- 7: Aufsammeltrommel
- 8: Aufnahmezinken
- 9: Erntegutzuführrichtung
- 10: Fördereinrichtung
- 11: Querförderschnecke
- 12: Einzugs- und Vorpresswalzen
- 13: Häckseltrommel
- 14: Gegenschneide
- 15: Messerschleifvorrichtung
- 16: Förderschacht
- 17: Nachbeschleuniger
- 18: Auswurfkrümmer
- 19:
- 20: Einzugsgehäuse
- 21: Schutzvorrichtung
- 22: Montierbarer Steg
- 23: Senkrechte Rückhaltefläche
- 24: Gewölbte Rückhaltefläche
- 25: Montage- bzw. Demontageelement
- 26: U-förmiger Bügelgriff
- 27:
- 28: Fahrerkabine
- 29: Stützelement
- 30:
- 31:
- 32:
- 33: Rückwärtige Verriegelung
- 34: Schraubverbindungen
- 35: Variabler Freiraum
- 36: Elastisches Abstandselement
- 37:
- 38:
- 39:
- 40:
- 41:
- 42:
- 43:
- 44:
- 45:
- 46:
- 47:

## Patentansprüche

1. Landwirtschaftliche Arbeitsmaschine (2) mit einer Schutzvorrichtung (21) die sich an der Vorderseite der landwirtschaftlichen Arbeitsmaschine (2) oberhalb von Funktionselementen der landwirtschaftlichen Arbeitsmaschine (2) erstreckt und als ein von den Funktionselementen getrenntes und beabstandetes Element ausgebildet ist,
**dadurch gekennzeichnet,**
**dass** die Schutzvorrichtung (21) einen Endes mit zumindest einem höhenbeweglichen Funktionselement verbunden ist und anderen Endes frei bewegbar die Höhenbewegungen des Funktionselements nachvolizieht und wobei der landwirtschaftlichen Arbeitsmaschine (2) frontseitig eine Fahrerkabine (28) zugeordnet und das freie Ende der Schutzvorrichtung (21) in einem Bereich unterhalb der vorderen Seite der Fahrerkabine (28) kollisionsfrei bewegbar ist.

2. Landwirtschaftliche Arbeitsmaschine (2) mit Schutzvorrichtung (21) nach einem der vorhergehenden Ansprüche,
**dadurch gekennzeichnet,**
**dass** sich die Schutzvorrichtung (21) oberhalb eines höhenbeweglichen Funktionselements zumindest bereichsweise über die Breite des höhenbeweglichen Funktionselements erstreckt.

3. Landwirtschaftliche Arbeitsmaschine (2) mit Schutzvorrichtung (21) nach einem der vorgehenden Ansprüche,
**dadurch gekennzeichnet,**
**dass** dem höhenbeweglichen Funktionselement zumindest ein flächiges Stützelement (29) mit rückwärtiger Verrieglung (33) zugeordnet ist, wobei die Schutzvorrichtung (21) auf dem Stützelement verriegelbar aufliegt.

4. Landwirtschaftliche Arbeitsmaschine (2) mit Schutzvorrichtung (21) nach einem der vorhergehenden Ansprüche,
**dadurch gekennzeichnet,**
**dass** die Schutzvorrichtung (21) aus elastischem Material besteht.

5. Landwirtschaftliche Arbeitsmaschine (2) mit Schutzvorrichtung (21) nach einem der vorhergehenden Ansprüche,
**dadurch gekennzeichnet,**
**dass** die Schutzvorrichtung (21) derart gewölbt ist, dass das von der Schutzvorrichtung (21) abgehaltene Material entlang der gewölbten Rückhaltefläche (24) abfließen kann.

6. Landwirtschaftliche Arbeitsmaschine (2) mit Schutzvorrichtung (21) nach einem der vorhergehenden Ansprüche,
**dadurch gekennzeichnet,**
**dass** die Krümmung der gewölbten Rückhaltefläche (24) größer als der durchschnittliche Reibwinkel zwischen dem zurückhaltenden Erntegut (5) und der gewölbten Rückhaltefläche (24) ist.

7. Landwirtschaftliche Arbeitsmaschine (2) mit Schutzvorrichtung (21) nach einem der vorhergehenden Ansprüche,
**dadurch gekennzeichnet,**
**dass** der Krümmungsradius der gewölbten Rückhaltefläche (24) derart gewählt ist, so dass während der Höhen- und Senkbewegungen des Funktionselements der Abstand zwischen der vorderen Unterkante der Fahrerkabine (28) und der Oberseite der gewölbten Rückhaltefläche (24) konstant bleibt.

8. Landwirtschaftliche Arbeitsmaschine (2) mit Schutzvorrichtung (21) nach einem der vorhergehenden Ansprüche,
**dadurch gekennzeichnet,**
**dass** die Schutzvorrichtung (21) an ihrem unteren Ende (22) mit Befestigungsstrukturen ausgeführt ist.

9. Landwirtschaftliche Arbeitsmaschine (2) mit Schutzvorrichtung (21) nach einem der vorhergehenden Ansprüche,
**dadurch gekennzeichnet,**
**dass** die Befestigungsstrukturen als Schraubenverbindungen (34) und/oder Klemmverbindungen ausgeführt sind.

10. Landwirtschaftliche Arbeitsmaschine (2) mit Schutzvorrichtung (21) nach einem der vorhergehenden Ansprüche,
**dadurch gekennzeichnet,**
**dass** die Schutzvorrichtung (21) an ihrem unteren Ende am höhenbeweglichen Funktionselement schwenkgelagert befestigt ist.

11. Landwirtschaftliche Arbeitsmaschine (2) mit Schutzvorrichtung (21) nach einem der vorhergehenden Ansprüche,
**dadurch gekennzeichnet,**
**dass** die Schutzvorrichtung (21) zur Montage bzw. Demontage mit zumindest einem Montage- bzw. Demontageelement (25) ausgeführt ist

12. Landwirtschaftliche Arbeitsmaschine (2) mit Schutzvorrichtung (21) nach einem der vorhergehenden Ansprüchen,
**dadurch gekennzeichnet,**
**dass** die Schutzvorrichtung (21) geräuschdämmend ausgeführt ist.

13. Landwirtschaftliche Arbeitsmaschine (2) mit Schutzvorrichtung (21) nach einem der vorhergehenden Ansprüche,
**dadurch gekennzeichnet,**
**dass** unterhalb der vorderen Seite der Fahrerkabine (28) quer zur Fahrtrichtung der landwirtschaftlichen Arbeitsmaschine (2) zumindest ein elastisches Abstandselement (36) ausgebildet ist.

14. Landwirtschaftliche Arbeitsmaschine (2) mit Schutzvorrichtung (21) nach Anspruch 13,
**dadurch gekennzeichnet,**
**dass** das Abstandselement (36) als elastischer Abstreifer ausgebildet ist und sich zumindest teilweise über die Breite der Schutzvorrichtung (21) streckt.

15. Landwirtschaftliche Arbeitsmaschine (2) mit Schutzvorrichtung (21) nach einem der vorhergehenden Ansprüche,
**dadurch gekennzeichnet,**
**dass** die landwirtschaftliche Arbeitsmaschine (2) als selbstfahrender Feldhäcksler (1) oder als Mähdrescher und das höhenbewegliche Funktionselement als Einzugsgehäuse (20) oder als Schrägförderkanal ausgeführt sind.

## Claims

1. An agricultural working machine (2) having a protective device (21) which extends at the front side of the agricultural working machine (2) above functional elements of the agricultural working machine (2) and is in the form of an element which is spaced and separate from the functional elements,
**characterised in that**
the protective device (21) is connected at one end to at least one functional element which is movable in height and at the other end freely movably follows the movements in height of the functional element and wherein a driving cab (28) is associated with the agricultural working machine (2) at the front end and the free end of the protective device (21) is movable in collision-free relationship in a region beneath the front side of the driving cab (28).

2. An agricultural working machine (2) with a protective device (21) according to claim 1 **characterised in that** the protective device (21) extends above a functional element which is movable in height at least in region-wise fashion over the width of the functional element which is movable in height.

3. An agricultural working machine (2) with a protective device (21) according to one of the preceding claims **characterised in that** at least one flat support element (29) with rearward locking means (33) is associated with the functional element which is movable in height, wherein the protective device (21) rests lockably on the support element.

4. An agricultural working machine (2) with a protective device (21) according to one of the preceding claims **characterised in that** the protective device (21) comprises elastic material.

5. An agricultural working machine (2) with a protective device (21) according to one of the preceding claims **characterised in that** the protective device (21) is curved in such a way that the material kept off by the protective device (21) can flow away along the curved retaining surface (24).

6. An agricultural working machine (2) with a protective device (21) according to one of the preceding claims **characterised in that** the curvature of the curved retaining surface (24) is greater than the average friction angle between the crop material (5) to be held back and the curved retaining surface (24).

7. An agricultural working machine (2) with a protective device (21) according to one of the preceding claims **characterised in that** the radius of curvature of the curved retaining surface (24) is so selected that during the raising and lowering movements of the functional element the spacing between the front lower edge of the driving cab (28) and the top side of the curved retaining surface (24) remains constant.

8. An agricultural working machine (2) with a protective device (21) according to one of the preceding claims **characterised in that** the protective device (21) is provided with its lower end (22) with fixing structures.

9. An agricultural working machine (2) with a protective device (21) according to one of the preceding claims **characterised in that** the fixing structures are in the form of screw connections (34) and/or clamp connections.

10. An agricultural working machine (2) with a protective device (21) according to one of the preceding claims **characterised in that** at its lower end the protective device (21) is pivotably mountedly fixed to the functional element which is movable in height.

11. An agricultural working machine (2) with a protective device (21) according to one of the preceding claims **characterised in that** the protective device (21) is provided with at least one mounting and dismantling element (25) for mounting and dismantling respectively.

12. An agricultural working machine (2) with a protective device (21) according to one of the preceding claims **characterised in that** the protective device (21) is of a sound-reducing nature.

13. An agricultural working machine (2) with a protective device (21) according to one of the preceding claims **characterised in that** at least one elastic spacer element (36) is provided beneath the front side of the driving cab (28) transversely to the direction of travel of the agricultural working machine (2).

14. An agricultural working machine (2) with a protective device (21) according to claim 13 **characterised in that** the spacer element (36) is in the form of an elastic stripper and extends at least partially over the width of the protective device (21).

15. An agricultural working machine (2) with a protective device (21) according to one of the preceding claims **characterised in that** the agricultural working machine (2) is in the form of a self-propelled forage harvester (1) or a combine harvester and the functional element which is movable in height is in the form of an intake housing (20) or an inclined conveyor passage.

## Revendications

1. Machine agricole à travail (2) avec dispositif de protection (21) qui s'étend, sur le côté frontal de la machine agricole à travail (2), au-dessus d'organes fonctionnels de la machine agricole à travail (2) et qui est réalisé comme un élément séparé des organes fonctionnels et comme élément posé à distance,
**caractérisée en ce que**
le dispositif de protection (21) est fixé à une extrémité avec au moins un organe fonctionnel mobile en hauteur et à une autre extrémité réalise de manière librement mobile, les déplacements en hauteur de l'organe fonctionnel et une cabine de conducteur (28) étant installée à l'avant à la machine agricole à travail (2) et l'extrémité libre du dispositif de protection (21) étant mobile sans risque de collision dans une zone en dessous de la partie avant de la cabine de conducteur (28).

2. Machine agricole à travail (2) avec dispositif de protection (21) selon l'une des revendications précédentes,
**caractérisée en ce que**
le dispositif de protection (21) s'étend au-dessus d'un organe fonctionnel mobile en hauteur au moins partiellement au-dessus de la largeur de l'organe fonctionnel mobile en hauteur.

3. Machine agricole à travail (2) avec dispositif de protection (21) selon l'une des revendications précédentes,
**caractérisée en ce que**
au moins un élément d'appui (29) plat muni d'un verrouillage inverse (33) est adjoint à l'organe fonctionnel mobile en hauteur, le dispositif de protection (21) étant posé à verrouillage sur l'élément d'appui.

4. Machine agricole à travail (2) avec dispositif de protection (21) selon l'une des revendications précédentes,
**caractérisée en ce que**
le dispositif de protection (21) est en matériau élastique.

5. Machine agricole à travail (2) avec dispositif de protection (21) selon l'une des revendications précédentes,
**caractérisée en ce que**
le dispositif de protection (21) est bombé de façon que la matière arrêtée par le dispositif de protection (21) peut être évacuée le long de la surface de retenue (24) bombée.

6. Machine agricole à travail (2) avec dispositif de protection (21) selon l'une des revendications précédentes,
**caractérisée en ce que**
la courbe de la surface de retenue bombée (24) est plus grande que l'angle de friction moyen entre le produit récolté retenu (5) et la surface de retenue bombée (24).

7. Machine agricole à travail (2) avec dispositif de protection (21) selon l'une des revendications précédentes,
**caractérisée en ce que**
le rayon de courbure de la surface de retenue bombée (24) est choisie de manière que pendant les mouvements de haut en bas de l'organe fonctionnel, la distance entre le bord inférieur avant de la cabine de chauffeur (28) et le côté supérieur de la surface de retenue bombée (24) reste constante.

8. Machine agricole à travail (2) avec dispositif de protection (21) selon l'une des revendications précédentes,
**caractérisée en ce que**
le dispositif de protection (21) est conçu sur son extrémité inférieure (22) avec des structures de fixation.

9. Machine agricole à travail (2) avec dispositif de protection (21) selon l'une des revendications précédentes,
**caractérisée en ce que**
les structures de fixation sont réalisées sous forme de raccords filetés (34) et/ou raccords par serrage.

10. Machine agricole à travail (2) avec dispositif de protection (21) selon l'une des revendications précédentes,
**caractérisée en ce que**
sur son extrémité inférieure, le dispositif de protection (21) est fixé à orientation sur l'organe fonctionnel mobile en hauteur.

11. Machine agricole à travail (2) avec dispositif protecteur (21) selon l'une des revendications précédentes,
**caractérisée en ce que**
le dispositif de protection (21) est réalisé à montage ou, selon le cas, démontage à l'aide d'au moins un élément de montage ou, selon le cas, de démontage (25).

12. Machine agricole à travail (2) avec dispositif de protection (21) selon l'une des revendications précédentes,
**caractérisée en ce que**
le dispositif de protection (21) est conçu insonorisé.

13. Machine agricole à travail (2) avec dispositif de protection (21) selon l'une des revendications précédentes,
**caractérisée en ce que**
en dessous du côté avant de la cabine de conducteur (28), transversalement à la direction de marche de la machine agricole à travail (2), au moins un élément élastique de distance (36) est prévu.

14. Machine agricole à travail (2) avec dispositif de protection (21) selon la revendication 13,
**caractérisée en ce que**
l'élément de distance (36) est conçu comme un racloir élastique et s'étend au moins partiellement sur la largeur du dispositif de protection (21).

15. Machine agricole à travail (2) avec dispositif de protection (21) selon l'une des revendications précédentes,
**caractérisée en ce que**
la machine agricole à travail (2) est conçue comme une ramasseuse-chargeuse automotrice (1) ou comme une moissonneuse-batteuse et l'organe fonctionnel mobile en hauteur l'est comme caisse d'alimentation (20) ou comme canal d'amenée traversale.
